# EUROPÄISCHE PATENTSCHRIFT

(11) **EP 2 687 649 B1**
(45) Veröffentlichungstag und Bekanntmachung des Hinweises auf die Patenterteilung: **17.06.2015**
(21) Anmeldenummer: 12177316.2
(22) Anmeldetag: 20.07.2012
(51) Int. Cl.: E04F 13/14, E04F 13/18, B28B 23/02, B29C 70/02

(54) **Plattenförmiges Bauelement sowie Verfahren zur Herstellung eines plattenförmigen Bauelements**
Method for manufacturing a board-shaped component and board-shaped component
Elément en forme de panneau et procédé destiné à la fabrication d'un élément en forme de panneau

(43) Veröffentlichungstag der Anmeldung: 22.01.2014
(73) Patentinhaber: STO SE & Co. KGaA, 79780 Stühlingen (DE)
(72) Erfinder: Pfeiffer, Christian, 89423 Gundelfingen (DE); Franz, Dirk, 66135 Saarbrücken (DE)
(74) Vertreter: Gottschalk, Matthias

(56) Entgegenhaltungen:
- DE-A1-102008 048 541
- US-A1- 2010 183 840

## Beschreibung

Die Erfindung betrifft ein plattenförmiges Bauelement zur Befestigung an einer Gebäudewand oder -decke mit den Merkmalen des Oberbegriffs des Anspruchs 1 sowie ein Verfahren zur Herstellung eines solchen plattenförmigen Bauelementes.

Das plattenförmige Bauelement enthält wenigstens einen mineralischen Leichtfüllstoff und wenigstens ein Bindemittel. Ferner weist das plattenförmige Bauelement eine außenliegende Armierung in Form eines Gewebes, Vlieses oder Papiers auf.

### Stand der Technik

Aus der Gebrauchsmusterschrift DE 298 12 975 U1 ist eine Verkleidungsplatte für eine Mauer bekannt, die einen Träger und eine auf den Träger aufgeklebte dünne Steinplatte umfasst. Die dünne Steinplatte kommt nach der Befestigung des Trägers an einer Mauer außen zu liegen, so dass eine dekorative Fassadenoberfläche geschaffen wird. Um eine Verkleidungsplatte mit einer außen liegenden Steinplatte bereit zu stellen, die eine ausreichende Eigensteifigkeit besitzt und dennoch möglichst leichtgewichtig ist, wird in der Gebrauchsmusterschrift vorgeschlagen, dass der Träger aus einer durch ein kunststoffgebundenes Granulat aus Blähglas gebildeten Tragplatte besteht. Die Tragplatte aus einem kunststoffgebundenen Blähglasgranulat weist im Verbund mit einer aufgeklebten, dünnen Steinplatte eine ausreichende Eigensteifigkeit bei gleichzeitig geringem Gesamtgewicht auf, so dass die Befestigung der Verkleidungsplatte an einem Untergrund mittels einer einfachen Klebeverbindung erfolgen kann. Die Anbringung einer in der Mauer verankerten Stützkonstruktion zwecks Befestigung der Verkleidungsplatte ist demnach entbehrlich. Um die Eigensteifigkeit der Verkleidungsplatte weiter zu erhöhen bzw. die Plattendicke weiter zu reduzieren, wird ferner vorgeschlagen, dass die Tragplatte zumindest mauerseitig eine als Armierung dienende Gewebeeinlage aufweist.

Aus der Offenlegungsschrift DE 101 04 347 A1 ist des Weiteren ein vorgefertigtes, großformatiges plattenförmiges Bauelement mit einer sichtseitigen Lage und einer mit der sichtseitigen Lage verbundenen rückseitigen Lage bekannt. Die sichtseitige Lage besteht zur Schaffung eines optisch ansprechenden, stabilen plattenförmigen Bauelementes aus einer Glas- oder Kunststoffplatte, während die rückseitige Lage aus einem durchsichtigen oder durchscheinenden Klebstoff, insbesondere Epoxidharz, besteht, in den partikel- und/oder plättchen- und/oder streifenförmige Materialien, wie beispielsweise Blähglas, Glas, Glassplitt, Metall, Kunststoff, Papier, Naturstein, Kunststein, Keramik und/oder Mineralien, eingebettet sind. Die Rückseite des Bauelementes kann zur Verbesserung der selbsttragenden Eigenschaften mit einem Fasergewebe oder einzelnen Fasern armiert und/oder mit Aussteifungselementen, vorzugsweise Metallprofilen, versehen sein. Ein derartiges plattenförmiges Bauelement soll insbesondere als Wand- und Deckenverkleidung oder als Bodenbelag einsetzbar sein.

Darüber hinaus bringt die Anmelderin unter der Bezeichnung StoVentec-Fassade ein Fassadensystem mit einer Trägerplatte auf den Markt, welche Blähglasgranulat als mineralischer Leichtfüllstoff sowie Epoxidharz als Bindemittel enthält. Die Trägerplatte ist beidseitig mit jeweils einem als Armierung dienenden Gewebe versehen, so dass sie eine ausreichende Stabilität zur Befestigung an einer Unterkonstruktion und zur Aufnahme wenigstens einer Putz- oder Bekleidungsschicht besitzt. Das Fassadensystem ist zur Ausbildung vorgehängter, hinterlüfteter Fassaden geeignet.

Des Weiteren ist aus der DE 10 2008 048 541 A1 ein Schicht-Verbundelement mit einer Füllstoffschicht und mindestens einer hieran angrenzenden LFI-MaterialSchicht sowie ein Verfahren zu dessen Herstellung bekannt. Die LFI-MaterialSchicht besteht aus einem Gemisch aus Glasfasern und einem Zwei-Komponenten-Binder. Zur Schaffung einer glasfaserfreien und optisch ansprechenden Oberfläche wird vorgeschlagen, an der der Füllstoffschicht abgewandten Seite einer LFI-Schicht eine Kunststoffschicht anzubringen.

Aus der US 2010/0183840 A1 gehen ferner ein Fassadenelement mit innen liegenden Armierungsfasern sowie ein Verfahren zu dessen Herstellung hervor.

Ausgehend von dem vorstehend genannten Stand der Technik liegt der Erfindung die Aufgabe zugrunde, ein plattenförmiges Bauelement zur Befestigung an einer Gebäudewand oder -decke auf Basis wenigstens eines mineralischen Leichtfiillstoffs und wenigstens eines Bindemittels bereits zu stellen, das die Funktionen Trägerpatte und dekoratives Verkleidungselement in sich vereinigt. Darüber hinaus soll das plattenförmige Bauelement einfach aufgebaut und kostengünstig herstellbar sein.

Zur Lösung der Aufgabe werden ein plattenförmiges Bauelement mit den Merkmalen des Anspruchs 1 sowie ein Verfahren zur Herstellung eines solchen plattenförmigen Bauelementes mit den Merkmalen des Anspruchs 9 vorgeschlagen. Vorteilhafte Ausführungsformen der Erfindung sind in den jeweiligen Unteransprüchen angegeben.

### Offenbarung der Erfindung

Das vorgeschlagene plattenförmige Bauelement zur Befestigung an einer Gebäudewand oder -decke auf Basis wenigstens eines mineralischen Leichtfüllstoffs und wenigstens eines Bindemittels besitzt eine außen liegende Armierung in Form eines Gewebes, Vlieses oder Papiers. Erfindungsgemäß ist eine weitere Armierung innen liegend angeordnet, so dass das plattenförmige Bauelement eine armierte und eine armierungsfreie Oberfläche besitzt. Die weitere Armierung ist dabei im Wesentlichen parallel zur außen liegenden Armierung sowie außermittig in Bezug auf den Querschnitt des plattenförmigen Bauelementes angeordnet. Der Abstand der weiteren Armierung zur armierten Oberfläche ist zudem größer als der Abstand zur armierungsfreien Oberfläche des plattenförmigen Bauelementes. Des Weiteren erfindungsgemäß trennt die innen liegende Armierung Schichten gleichen Materials oder Schichten gleichen Ausgangsmaterials, das zur Herstellung der die armierungsfreie Oberfläche ausbildenden Schicht um wenigstens einen weiteren Hilfsstoff angereichert worden ist, voneinander.

Durch die innen liegende Anordnung der weiteren Armierung wird zum Einen den Anforderungen an die Bauzulassung einer Trägerplatte Rechnung getragen, welche die Anordnung von wenigstens zwei Armierungen vorsehen. Zum Anderen wird eine armierungsfreie Oberfläche geschaffen, welche optisch ansprechend gestaltet sein kann. In der Verwendung als Fassadenelement bedarf das plattenförmige Bauelement demnach keiner zusätzlichen Bekleidung, um eine optisch ansprechende Fassade herzustellen. Das erfindungsgemäße plattenförmige Bauelement ist insbesondere zur Herstellung einer Vorhangfassade geeignet, welche über eine Unterkonstruktion aus Latten und/oder Profilen an einer Gebäudewand oder -decke befestigt ist. Sowohl die außen als auch die innen liegende Armierung gewährleisten eine ausreichende Stabilität des plattenförmigen Bauelementes für die Befestigung an einer derartigen Unterkonstruktion, da durch die erfindungsgemäße Anordnung der innen liegenden weiteren Armierung die vorgeschriebenen zwei Gewebeschichten realisiert werden. Denn die innen liegende weitere Armierung ist bevorzugt in unmittelbarer Nähe zur armierungsfreien Oberfläche angeordnet, jedoch ohne nach Außen in Erscheinung zu treten. Die innen liegende weitere Armierung unterteilt demnach den Querschnitt des plattenförmigen Bauelementes in einen tragenden Bereich und einen den tragenden Bereich abdeckenden weiteren Bereich, wobei der tragende Bereich sich weit über die Hälfte des Querschnitts des plattenförmigen Bauelementes erstreckt. Der den tragenden Bereich abdeckende weitere Bereich des Querschnitts des plattenförmigen Bauelementes ist ausreichend stark gewählt, um eine optisch ansprechende Oberfläche auszubilden. Das plattenförmige Bauelement wird daher bevorzugt derart an einer Gebäudewand oder -decke befestigt, dass die armierungsfreie Oberfläche außen liegend angeordnet ist.

Bevorzugt werden durch die innen liegende Armierung Schichten gleichen Materials voneinander getrennt. Das heißt, dass ohne innen liegende Armierung das plattenförmige Bauelement im Querschnitt einen homogenen Aufbau aufweisen würde. Anders als im eingangs angeführten Stand der Technik werden demnach nicht lediglich zwei verschiedene Plattenwerkstoffe über eine Armierung miteinander verbunden, um zur Ausbildung eines mehrschichtigen Bauelementes zu gelangen. Die mehrschichtige Ausbildung ergibt sich vielmehr zwangsläufig durch die vorgeschlagene innen liegende Anordnung der Armierung.

Neben der Verwendung des gleichen Materials zur Herstellung der den tragenden Bereich und den abdeckenden Bereich ausbildenden Schichten besteht ferner die Möglichkeit, das Ausgangsmaterial um wenigstens einen weiteren Hilfsstoff anzureichern, bevor es zur Herstellung der die armierungsfreie Oberfläche aufweisenden Schicht verwendet wird. Auf diese Weise kann der außen liegenden, armierungsfreien Schicht eine weitere Funktionalität und/oder eine andere Optik verliehen werden. Als Hilfsstoffe eignen sich insbesondere Hydrophobierungsmittel, Konservierungsmittel, Biozide, Indikatoren, Initiatoren, Aktivatoren, Farbstoffe, Pigmente, wie zum Beispiel Effektpigmente, schallabsorbierende Füllstoffe und/oder feuchteregulierende Füllstoffe. Das Hilfsmittel - sofern enthalten - ist dabei auf den jeweiligen Einsatzbereich des plattenförmigen Bauelementes abgestimmt. Beispielsweise erweist sich ein feuchteregulierender Füllstoff bei einer Innenraum-Anwendung des plattenförmigen Bauelementes als sinnvoll. Denn durch den feuchteregulierenden Füllstoff ist das plattenförmige Bauelement in der Lage, Feuchtigkeit aufzunehmen und wieder abzugeben, so dass das Raumklima verbessert wird. Bei einer Anwendung des plattenförmigen Bauelementes im Außenbereich sind vorzugsweise keine feuchteregulierenden Füllstoffe enthalten, sondern Hydrophobierungsmittel, um die Aufnahme von Feuchtigkeit zu unterbinden. Alternativ oder ergänzend können Biozide enthalten sein, um Algenbewuchs zu verhindern, so dass die ansprechende Optik der Fassade über einen langen Zeitraum hinweg erhalten bleibt.

Gemäß einer bevorzugten Ausführungsform der Erfindung beträgt die Gesamtstärke des plattenförmigen Bauelementes 5 mm bis 40 mm. Dies entspricht im Wesentlichen der Gesamtstärke herkömmlicher Trägerplatten einschließlich hierauf aufgebrachter Putz- oder Bekleidungsschichten, wie sie derzeit zur Verkleidung von Gebäudewänden oder -decken - sowohl im Außenbereich als auch im Innenbereich - Einsatz finden. Dadurch ist gewährleistet, dass das plattenförmige Bauelement anstelle derartiger Systeme treten kann. Bei einer Gesamtstärke von 5 mm bis 40 mm beträgt der Abstand der innen liegenden Armierung zur armierungsfreien Oberfläche bevorzugt 0,5 mm bis 15 mm. Die Nähe zur armierungsfreien Oberfläche stellt sicher, dass zwischen den beiden Armierungen ein ausreichend starker tragender Querschnitt des plattenförmigen Bauelementes verbleibt. Zudem trägt der Abstand der Armierungen zueinander dazu bei, dass die Gefahr eines Schüsseln des plattenförmigen Bauelements verringert wird.

Es sei angemerkt, dass eine außen oder innen liegende Armierung die Anordnung wenigstens eines der Armierung dienenden Gewebes, Vlieses oder Papiers erfordert. Das heißt, dass die außen und/oder die innen liegende Armierung jeweils auch mehr als eine Gewebe-, Vlies- und/oder Papierlage umfassen kann. Darüber hinaus können auch Gitter, Gewirke, Gelege oder dergleichen der Ausbildung einer Armierung dienen, so dass auch derartige Gebilde vorliegend als Armierung verstanden werden.

Gemäß einer Weiterbildung der Erfindung besitzt die armierungsfreie Oberfläche des plattenförmigen Bauelementes eine Struktur und/oder ein Dekor. Dadurch kann die armierungsfreie Oberfläche optisch noch ansprechender gestaltet werden. Die Struktur und/oder das Dekor kann beispielsweise bei der Herstellung des plattenförmigen Bauelementes mit eingeprägt bzw. eingeformt worden sein. Auf diese Weise lässt sich die Struktur bzw. das Dekor besonders einfach und kostengünstig herstellen. Darüber hinaus ist es möglich, die Struktur und/oder das Dekor in einem der Herstellung des plattenförmigen Bauelementes nachfolgenden Arbeitsschritt aufzubringen.

Die Struktur und/oder das Dekor kann bzw. können rein dekorativen Zwecken dienen und/oder funktionale Aufgaben erfüllen. Beispielsweise kann eine Struktur und/oder ein reliefartiges Dekor auch eine schalldämmende, insbesondere schallabsorbierende Funktion besitzen. Das plattenförmige Bauelement ist dann ferner als Schalldämmelement oder Akustikelement einsetzbar. Bei Anbringung in einem Innenraum vermag das plattenförmige Bauelement beispielsweise einen Beitrag zur Verbesserung der Raumakustik zu leisten. Strukturen und/oder Dekore können zudem Informationen beinhalten, so dass das plattenförmige Bauelement ferner als Informationsträger einsetzbar ist.

Alternativ oder ergänzend kann die armierungsfreie Oberfläche des plattenförmigen Bauelementes eine Beschichtung und/oder einen Farbanstrich aufweisen. Auch auf diese Weise lässt sich die armierungsfreie Oberfläche optisch noch ansprechender gestalten. Soll durch Aufbringen einer Beschichtung und/oder eines Farbanstrichs dem plattenförmigen Bauelement eine zusätzliche Funktionalität verliehen werden, wird vorgeschlagen, dass in der Beschichtung und/oder dem Farbanstrich wenigstens ein zusätzlicher Hilfsstoff, insbesondere ein Hydrophobierungsmittel, ein Konservierungsmittel, ein Biozid, ein Indikator, ein Initiator, ein Aktivator, ein Farbstoff, ein Pigment, beispielsweise ein Effektpigment, ein schallabsorbierender Füllstoff und/oder ein feuchteregulierender Füllstoff, enthalten ist. Das enthaltene Hilfsmittel ist dabei wiederum bevorzugt auf den jeweiligen Einsatzbereich des plattenförmigen Bauelementes abgestimmt.

Vorteilhafterweise umfasst der mineralische Leichtfüllstoff geblähte Partikel aus einem glasreichen vulkanischen Gestein, wie beispielsweise Obsidian, Vermiculit und/oder Bims. Derartige mineralische Leichtfüllstoffe weisen ein geringes Gewicht und zugleich eine hohe Festigkeit auf, so dass ein derartige Leichtfüllstoffe umfassendes plattenförmiges Bauelement ebenfalls ein geringes Geweicht aufweist und damit leicht zu handhaben ist. Ferner sind derartige Leichtfüllstoffe sowohl für Bauelemente geeignet, die Anwendung im Innenbereich als auch im Außenbereich finden sollen.

Alternativ oder ergänzend ist vorgesehen, dass der mineralische Leichtfüllstoff Blähglasgranulat umfasst. Hierbei handelt es sich bevorzugt um aus Altglas hergestelltes Blähglasgranulat, so dass ein Recycling-Material Einsatz findet.

Des Weiteren wird vorgeschlagen, dass das Bindemittel ein organisches Bindemittel, insbesondere auf Basis von Epoxidharz oder Polyurethan, eine Polymerdispersion und/oder ein wärme- und/oder strahlungshärtendes Bindemittel umfasst. In Verbindung mit wenigstens einem mineralischen Leichtfüllstoff gewährleisten derartige Bindemittel einen stabilen Verbund der Leichtfüllstoffpartikel untereinander. Denn organische Bindemittel haben im Vergleich zu mineralischen Bindemittel regelmäßig eine höhere Bindekraft. Es kann demnach der Anteil des Bindemittels reduziert werden.

Darüber hinaus kann vorgesehen sein, dass das Bindemittel ein anorganisches Bindemittel, insbesondere Wasserglas und/oder ein zementöses hydraulisches Bindemittel, umfasst. Die geringere Bindekraft im Vergleich zu den vorstehend genannten organischen Bindemitteln gilt es dann durch einen höheren Bindemittelanteil zu kompensieren.

Das ferner zur Lösung der eingangs genannten Aufgabe vorgeschlagene erfindungsgemäße Verfahren zur Herstellung eines plattenförmigen Bauelementes auf Basis wenigstens eines mineralischen Leichtfüllstoffs und wenigstens eines Bindemittels umfasst die folgenden Verfahrensschritte:
- Mischen der Ausgangsstoffe umfassend wenigstens einen mineralischen Leichtfüllstoff und wenigstens ein Bindemittel, so dass eine homogene Mischung vorliegt,
- Auslegen einer Form mit einem der Armierung dienenden Gewebe, Vlies oder Papier,
- Einbringen eines ersten Teils der homogenen Mischung umfassend wenigstens einen mineralischen Leichtfüllstoff und wenigstens ein Bindemittel in die Form,
- Einlegen eines weiteren der Armierung dienenden Gewebes, Vlieses oder Papiers,
- Einbringen eines weiteren Teils der homogenen Mischung in die Form, so dass das eingelegte weitere Gewebe, Vlies oder Papier von der eingebrachten Mischung abgedeckt wird, wobei das Verhältnis weiterer Teil zu erstem Teil der homogenen Mischung <1, vorzugsweise <0,5 ist,
- Schließen der Form und Aushärten des Forminhalts unter Zugabe von Druck und/oder Wärme.

Ein nach diesem Verfahren hergestelltes plattenförmiges Bauelement weist demnach einen mehrschichtigen Aufbau auf, wobei den Schichten grundsätzlich die gleichen Ausgangsstoffe zugrunde liegen. Die Schichten werden durch die eingelegte weitere Armierung definiert, wobei die Armierung, insbesondere in Form eines Gewebes, weiterhin einen stabilen Verbund der Schichten untereinander gewährleistet. Die durch die eingelegte Armierung definierten Schichten erfüllen unterschiedliche Funktionen. Die zwischen der außen und der innen liegenden Armierung ausgebildete Schicht besitzt eine tragende Funktion und weist demnach im Querschnitt eine größere Stärke als die darauf folgende Schicht auf. Die Funktion der darauf folgenden Schicht ist es, eine optisch ansprechende Oberfläche auszubilden, die darüber hinaus noch - in Abhängigkeit vom jeweiligen Einsatzbereich des plattenförmigen Bauelementes - Zusatzaufgaben zu erfüllen vermag. Beispielsweise kann während des Formgebungsprozesses in die armierungsfreie Oberfläche der weiteren Schicht eine Struktur und/oder ein Dekor eingeprägt bzw. eingeformt werden, die dem plattenförmigen Bauelement schallabsorbierende Eigenschaften verleiht. Auf diese Weise lässt sich in einem formgebenden Arbeitsschritt ein plattenförmiges Bauelement herstellen, das die Funktion einer Trägerplatte und eines Verkleidungselementes in sich vereinigt.

Bevorzugt werden geblähte Partikel aus einem glasreichen vulkanischen Gestein, wie beispielsweise Obsidian, Vermiculit und/oder Bims, und/oder Blähglasgranulat als mineralischer Leichtfüllstoff verwendet und mit wenigstens einem Bindemittel und/oder wenigstens einem weiteren mineralischen Leichtfüllstoff vermischt. Die Ausgangsstoffe entsprechen demnach den üblichen Ausgangstoffen zur Herstellung herkömmlicher Trägerplatten, so dass die bereits herstellerseitig vorhandenen Anlagen zur Herstellung des plattenförmigen Bauelementes eingesetzt werden können. Dadurch ist das plattenförmige Bauelement besonders kostengünstig herstellbar.

Weiterhin bevorzugt wird wenigstens ein organisches Bindemittel, insbesondere auf Basis von Epoxidharz oder Polyurethan, eine Polymerdispersion und/oder ein wärme- und/oder strahlungshärtendes Bindemittel, als Bindemittel verwendet. Derartige Bindemittel weisen im Vergleich zu anorganischen Bindemittels eine hohe Bindekraft auf, so dass der Bindemittelanteil reduziert werden kann und dennoch ein stabiler Verbund der Leichtfüllstoffpartikel untereinander erreicht wird.

Alternativ oder ergänzend wird die Verwendung wenigstens eines anorganischen Bindemittels, insbesondere Wasserglas und/oder ein zementöses hydraulisches Bindemittel, als Bindemittel vorgeschlagen. Die Wahl des Bindemittels ist insbesondere von dem jeweils vorgesehenen Einsatzbereich des herzustellenden plattenförmigen Bauelementes abhängig.

Vorteilhafterweise werden 75 bis 95 Gew.-%, vorzugsweise 83 bis 93 Gew.-%, wenigstens eines mineralischen Leichtfüllstoffs und 5 bis 25 Gew.-%, vorzugsweise 7 bis 17 Gew.-%, wenigstens eines Bindemittels jeweils bezogen auf das Gesamtgewicht der Ausgangsstoffe vermischt. Derartige Mischungsverhältnisse gewährleisten einen stabilen Verbund der Leichtfüllstoffpartikel untereinander, so dass das plattenförmige Bauelement hervorragende mechanische Eigenschaften besitzt.

Gemäß einer Weiterbildung des erfindungsgemäßen Verfahrens wird zumindest dem weiteren Teil der homogenen Mischung umfassend wenigstens einen mineralischen Leichtfüllstoff und wenigstens ein Bindemittel vor dem Einbringen in die Form wenigstens ein Hilfsstoff, insbesondere ein Hydrophobierungsmittel, ein Konservierungsmittel, ein Biozid, ein Indikator, ein Initiator, ein Aktivator, ein Farbstoff, ein Pigment, beispielsweise ein Effektpigment, ein schallabsorbierender Füllstoff und/oder ein feuchteregulierender Füllstoff, zugegeben. Dadurch ist es möglich, der aus dem weiteren Teil der Mischung hergestellten weiteren Schicht eine zusätzliche Funktionalität aufzugeben. Auf diese Weise lassen sich plattenförmige Bauelemente für die unterschiedlichsten Einsatzbereiche herstellen. Indem wenigstens ein bestimmter Hilfsstoff lediglich dem weiteren Teil der Mischung der Ausgangsstoffe zugegeben wird, kann die Menge des zugegebenen Hilfsstoffs deutlich reduziert werden. Dies wiederum wirkt sich günstig auf die Herstellungskosten aus.

Alternativ oder ergänzend kann in die armierungsfreie Oberfläche des herzustellenden plattenförmigen Bauelementes während des Aushärtens unter Zugabe von Druck und/oder Wärme eine Struktur und/oder ein Dekor eingeprägt werden. Die Struktur und/oder das Dekor können der Gestaltung der armierungsfreien Oberfläche des plattenförmigen Bauteils dienen und/oder dem plattenförmigen Bauteil bestimmte funktionale, insbesondere schallabsorbierende Eigenschaften verleihen.

Alternativ oder ergänzend kann die armierungsfreie Oberfläche des plattenförmigen Bauelementes nach dem Aushärten und Entformen mit einer Struktur und/oder einem Dekor versehen werden. Beispielsweise kann eine Struktur und/oder ein Dekor mittels eines materialabtragenden Verfahrens hergestellt werden. Darüber hinaus kann die Struktur und/oder das Dekor auch durch den Auftrag von Material aufgebracht werden. Die Ausbildung einer Struktur und/oder eines Dekors in einem nachfolgenden Arbeitsschritt eröffnet eine Vielzahl von Möglichkeiten, welche hier nicht abschließend aufzählbar sind.

Alternativ oder ergänzend kann die armierungsfreie Oberfläche des plattenförmigen Bauelementes nach dem Aushärten und Entformen mit einer Beschichtung und/oder einem Farbanstrich versehen werden. Auch auf diese Weise lassen sich Strukturen und/oder Dekore auf das plattenförmige Bauelement aufbringen. Darüber hinaus können dem plattenförmigen Bauelement zusätzliche Funktionalitäten aufgegeben werden, wenn der Beschichtung und/oder dem Farbanstrich zuvor ein Hilfsstoff, insbesondere ein Hydrophobierungsmittel, ein Konservierungsmittel, ein Biozid, ein Indikator, ein Initiator, ein Aktivator, ein Farbstoff bzw. Pigment, beispielsweise ein Effektpigment, ein schallabsorbierender Füllstoff und/oder ein feuchteregulierender Füllstoff, zugegeben wird.

Nachfolgend werden das erfindungsgemäße plattenförmige Bauelement und das erfindungsgemäße Verfahren anhand verschiedener Ausführungsbeispiele näher beschrieben.

### Erstes Ausführungsbeispiel

Es werden 17,4 kg Blähglasgranulat mit einer mittleren Korngröße zwischen 0,25 mm und 4 mm sowie 2 kg Epoxidharz als Bindemittel gemischt. In eine Form mit einer Grundfläche der 1260 mm x 2620 mm und einer Höhe von 35 mm wird ein Armierungsgewebe eingelegt, das eine Maschenweite 4 mm x 4 mm besitzt. 13,4 kg der Mischung aus Blähglasgranulat und Epoxidharz wird durch Aufstreuen auf das Armierungsgewebe aufgebracht und ohne Druck grob geglättet. Auf die aufgebrachte und grob geglättete Mischung wird ein weiteres Armierungsgewebe gelegt. Hierauf wird die restliche Mischung aus Blähglasgranulat und Epoxidharz aufgebracht und wiederum grob glatt gestrichen. Anschließend wird die Form mit einem Pressdeckel verschlossen und der Forminhalt ca. 3 Minuten bei einer Temperatur von ca. 130°C gepresst, so dass der ausgehärtete Forminhalt eine Platte mit einer Dicke von 15 mm ergibt. Die armierungsfreie Oberfläche der auf diese Weise erhaltenen Platte besitzt aufgrund der Korngröße des verwendeten Blähglasgranulats eine Porenbetonoptik.

### Zweites Ausführungsbeispiel

Es wird zunächst eine Platte mit einer Dicke von 15 mm entsprechend dem ersten Ausführungsbeispiel hergestellt. In einem nachfolgenden Arbeitsschritt werden zylinderförmige Vertiefungen mit einem Durchmesser zwischen 3 und 4 mm einer Tiefe von 4 mm in die armierungsfreie Oberfläche eingefräst. Die Anordnung der zylinderförmigen Vertiefungen erfolgt rasterartig, d.h. in gleichmäßigen Abständen zueinander, wobei die Abstände zwischen den Rasterachsen jeweils 8 mm betragen. Durch die nachträgliche Oberflächenstrukturierung werden die akustischen bzw. schalldämmenden Eigenschaften der Platte verbessert.

### Drittes Ausführungsbeispiel

Es wird eine Platte mit einer Dicke von 15 mm entsprechend dem ersten Ausführungsbeispiel hergestellt, wobei jedoch ein Pressdeckel mit einer strukturierten Pressfläche verwendet wird. Auf diese Weise wird eine Oberflächenstrukturierung der armierungsfreien Oberfläche der Platte zur Verbesserung der akustischen bzw. schalldämmenden Eigenschaften bereits beim Aushärten des Forminhaltes eingebracht. Der im zweiten Ausführungsbeispiel genannte nachfolgende Bearbeitungsschritt kann demnach entfallen. Die mittels des Pressdeckels eingeprägten dreidimensionalen Strukturen können auch ein Dekor ausbilden, so dass ferner die Optik der Platte verbessert wird.

### Viertes Ausführungsbeispiel

Es werden 15,1 kg Blähglasgranulat mit einer mittleren Korngröße zwischen 0,25 mm und 4 mm sowie 1,8 kg Epoxidharz als Bindemittel gemischt. In eine Form mit einer Grundfläche der 1260 mm x 2620 mm und einer Höhe von 35 mm wird ein Armierungsgewebe eingelegt, das eine Maschenweite 4 mm x 4 mm besitzt. 13,4 kg der Mischung aus Blähglasgranulat und Epoxidharz wird durch Aufstreuen auf das Armierungsgewebe aufgebracht und ohne Druck grob geglättet. Auf die aufgebrachte und grob geglättete Mischung wird ein weiteres Armierungsgewebe gelegt. Hierauf wird die restliche Mischung aus Blähglasgranulat und Epoxidharz aufgebracht, der zuvor jedoch weitere 2 kg Blähglasgranulat der Korngröße 4 mm und weitere 0,2 kg Epoxidharz zugegeben werden. Die aufgebrachte Mischung wird wiederum grob glatt gestrichen. Anschließend wird die Form mit einem Pressdeckel verschlossen und der Forminhalt ca. 3 Minuten bei einer Temperatur von ca. 130°C gepresst, so dass der ausgehärtete Forminhalt eine Platte mit einer Dicke von 15 mm ergibt. Die armierungsfreie Oberfläche der auf diese Weise erhaltenen Platte besitzt aufgrund der Korngröße des verwendeten Blähglasgranulats eine offenporige Grobkornstruktur und demnach gute akustische bzw. schalldämmende Eigenschaften.

### Fünftes Ausführungsbeispiel

Es wird eine Platte mit einer Dicke von 15 mm entsprechend dem ersten Ausführungsbeispiel hergestellt, wobei jedoch dem restlichen Teil der Mischung aus Blähglasgranulat und Epoxidharz, welcher auf die weitere Armierungsschicht aufgebracht wird, zuvor noch Farbpigmente beigemischt werden. Die beizumischende Farbpigmentmenge richtet sich nach der jeweils gewünschten Farbintensität. Indem die Farbpigmente beigemischt werden, ist die hieraus hergestellte Schicht durchgehend gefärbt. Im Unterschied zu einer nur außenseitig aufgebrachten herkömmlichen Farbschicht bleibt der gewünschte Farbeindruck demnach auch dann erhalten, wenn die Oberfläche der Schicht Verletzungen oder Beschädigungen, beispielsweise in Form tiefer Kratzer, aufweist.

### Sechstes Ausführungsbeispiel

Es wird eine Platte mit einer Dicke von 15 mm entsprechend dem fünften Ausführungsbeispiel hergestellt, wobei jedoch anstelle der Farbpigmente Silane und/oder Siloxane als Hydrophobierungsmittel zugegeben werden. Die Menge der zuzugebenden Hydrophobierungsmittel richtet sich dabei nach dem jeweils gewünschten Hydrophobierungsgrad. Auf diese Weise können beispielsweise Platten mit tiefen-hydrophobierten und nicht-saugenden Oberflächen hergestellt werden. Die Tiefenhydrophobierung weist gegenüber einer lediglich oberflächlich aufgebrachten Hydrophobierungsschicht den Vorteil auf, dass bei Verletzungen der Oberfläche die wasserabweisende Wirkung nicht verloren geht. Gegenüber einer durchgehend hydrophobierten Platte weist die erfindungsgemäße Platte wiederum den Vorteil auf, dass Hydrophobierungsmittel in geringeren Mengen benötigt werden, was sich günstig auf die Herstellungskosten auswirkt. Ferner werden Ressourcen geschont.

Die vorstehend in Zusammenhang mit den Ausführungsbeispielen genannten Verfahrensschritte zur Herstellung eines erfindungsgemäßen plattenförmigen Bauelementes sind untereinander kombinierbar bzw. austauschbar, so dass eine Vielzahl unterschiedlicher plattenförmiger Bauelemente herstellbar ist, die sich insbesondere im Hinblick auf die jeweilige Funktionalität und/oder Gestaltung der die armierungsfreie Oberfläche aufweisenden Schicht unterscheiden.

## Patentansprüche

1. Plattenförmiges Bauelement zur Befestigung an einer Gebäudewand oder -decke auf Basis wenigstens eines mineralischen Leichtfüllstoffs und wenigstens eines Bindemittels, wobei das plattenförmige Bauelement eine außen liegende Armierung in Form eines Gewebes, Vlieses oder Papiers besitzt,
**dadurch gekennzeichnet, dass** eine weitere Armierung innen liegend angeordnet ist, so dass das plattenförmige Bauelement eine armierte und eine armierungsfreie Oberfläche besitzt, wobei die weitere Armierung im Wesentlichen parallel zur außen liegenden Armierung sowie außermittig in Bezug auf den Querschnitt des plattenförmigen Bauelementes angeordnet ist und wobei der Abstand der weiteren Armierung zur armierten Oberfläche des plattenförmigen Bauelementes größer als der Abstand zur armierungsfreien Oberfläche des plattenförmigen Bauelementes ist; ferner, dass durch die innen liegende Armierung Schichten gleichen Materials oder Schichten gleichen Ausgangsmaterials voneinander getrennt werden; und daß das Material oder Ausgangsmaterial zur Herstellung der die armierungsfreie Oberfläche ausbildenden Schicht um wenigstens einen weiteren Hilfsstoff angereichert worden ist.

2. Bauelement nach Anspruch 1,
**dadurch gekennzeichnet, dass** die Gesamtstärke des plattenförmigen Bauelementes 5 mm bis 40 mm und der Abstand der innen liegenden Armierung zur armierungsfreien Oberfläche 0,5 mm bis 15 mm beträgt.

3. Bauelement nach Anspruch 1 oder 2,
**dadurch gekennzeichnet, dass** die armierungsfreie Oberfläche eine Struktur und/oder ein Dekor besitzt.

4. Bauelement nach einem der vorhergehenden Ansprüche,
**dadurch gekennzeichnet, dass** die armierungsfreie Oberfläche eine Beschichtung und/oder einen Farbanstrich aufweist, wobei in der Beschichtung und/oder dem Farbanstrich vorzugsweise wenigstens ein zusätzlicher Hilfsstoff, insbesondere ein Hydrophobierungsmittel, ein Konservierungsmittel, ein Biozid, ein Indikator, ein Initiator, ein Aktivator, ein Farbstoff, ein Pigment, beispielsweise ein Effektpigment, ein schallabsorbierender Füllstoff und/oder ein feuchteregulierender Füllstoff, enthalten ist.

5. Bauelement nach einem der vorhergehenden Ansprüche,
**dadurch gekennzeichnet, dass** der mineralische Leichtfüllstoff geblähte Partikel aus einem glasreichen vulkanischen Gestein, wie beispielsweise Obsidian, Vermiculit und/oder Bims, umfasst.

6. Bauelement nach einem der vorhergehenden Ansprüche,
**dadurch gekennzeichnet, dass** der mineralische Leichtfüllstoff Blähglasgranulat umfasst.

7. Bauelement nach einem der vorhergehenden Ansprüche,
**dadurch gekennzeichnet, dass** das Bindemittel ein organisches Bindemittel, insbesondere auf Basis von Epoxidharz oder Polyurethan, eine Polymerdispersion und/oder ein wärme- und/oder strahlungshärtendes Bindemittel umfasst.

8. Bauelement nach einem der vorhergehenden Ansprüche,
**dadurch gekennzeichnet, dass** das Bindemittel ein anorganisches Bindemittel, insbesondere Wasserglas und/oder ein zementöses hydraulisches Bindemittel, umfasst.

9. Verfahren zur Herstellung eines plattenförmigen Bauelementes auf Basis wenigstens eines mineralischen Leichtfüllstoffs und wenigstens eines Bindemittels, wobei das Verfahren die folgenden Schritte umfasst,
- Mischen der Ausgangsstoffe umfassend wenigstens einen mineralischen Leichtfüllstoff und wenigstens ein Bindemittel, so dass eine homogene Mischung vorliegt,
- Auslegen einer Form mit einem der Armierung dienenden Gewebe, Vlies oder Papier,
- Einbringen eines ersten Teils der homogenen Mischung umfassend wenigstens einen mineralischen Leichtfüllstoff und wenigstens ein Bindemittel in die Form,
- Einlegen eines weiteren der Armierung dienenden Gewebes, Vlieses oder Papiers,
- Einbringen eines weiteren Teils der homogenen Mischung in die Form, so dass das eingelegte weitere Gewebe, Vlies oder Papier von der eingebrachten Mischung abgedeckt wird, wobei das Verhältnis weiterer Teil zu erstem Teil der homogenen Mischung <1, vorzugsweise <0,5 ist,
- Schließen der Form und Aushärten des Forminhalts unter Zugabe von Druck und/oder Wärme.

10. Verfahren nach Anspruch 9,
**dadurch gekennzeichnet, dass** als mineralischer Leichtfüllstoff geblähte Partikel aus einem glasreichen vulkanischen Gestein, wie beispielsweise Obsidian, Vermiculit und/oder Bims, und/oder Blähglasgranulat verwendet werden und mit wenigstens einem Bindemittel und/oder wenigstens einem weiteren mineralischen Leichtfüllstoff vermischt werden.

11. Verfahren nach Anspruch 9 oder 10,
**dadurch gekennzeichnet, dass** als Bindemittel wenigstens ein organisches Bindemittel, insbesondere auf Basis von Epoxidharz oder Polyurethan, eine Polymerdispersion und/oder ein wärme- und/oder strahlungshärtendes Bindemittel, verwendet wird.

12. Verfahren nach einem der Ansprüche 9 bis 11,
**dadurch gekennzeichnet, dass** als Bindemittel wenigstens ein anorganisches Bindemittel, insbesondere Wasserglas und/oder ein zementöses hydraulisches Bindemittel, verwendet wird.

13. Verfahren nach einem der Ansprüche 9 bis 12,
**dadurch gekennzeichnet, dass** 75 bis95 Gew.-%, vorzugsweise 83 bis 93 Gew.-%, wenigstens eines mineralischen Leichtfüllstoffs und 5 bis 25 Gew.-%, vorzugsweise 7 bis 17 Gew.-%, wenigstens eines Bindemittels jeweils bezogen auf das Gesamtgewicht der Ausgangsstoffe vermischt werden.

14. Verfahren nach einem der Ansprüche 9 bis 13,
**dadurch gekennzeichnet, dass** zumindest dem weiteren Teil der homogenen Mischung umfassend wenigstens einen mineralischen Leichtfüllstoff und wenigstens ein Bindemittel vor dem Einbringen in die Form wenigstens ein Hilfsstoff, insbesondere ein Hydrophobierungsmittel, ein Konservierungsmittel, ein Biozid, ein Indikator, ein Initiator, ein Aktivator, ein Farbstoff, ein Pigment, beispielsweise ein Effektpigment, ein schallabsorbierender Füllstoff und/oder ein feuchteregulierender Füllstoff, zugegeben wird.

15. Verfahren nach einem der Ansprüche 9 bis 14,
**dadurch gekennzeichnet, dass** in die armierungsfreie Oberfläche des herzustellenden plattenförmigen Bauelementes während des Aushärtens unter Zugabe von Druck und/oder Wärme eine Struktur und/oder ein Dekor eingeprägt wird.

16. Verfahren nach einem der Ansprüche 9 bis 15,
**dadurch gekennzeichnet, dass** die armierungsfreie Oberfläche des plattenförmigen Bauelementes nach dem Aushärten und Entformen mit einer Struktur und/oder einem Dekor versehen wird.

17. Verfahren nach einem der Ansprüche 9 bis 16,
**dadurch gekennzeichnet, dass** die armierungsfreie Oberfläche des plattenförmigen Bauelementes nach dem Aushärten und Entformen mit einer Beschichtung und/oder einem Farbanstrich versehen wird, wobei vorzugsweise der Beschichtung und/oder dem Farbanstrich zuvor ein Hilfsstoff, insbesondere ein Hydrophobierungsmittel, ein Konservierungsmittel, ein Biozid, ein Indikator, ein Initiator, ein Aktivator, ein Farbstoff bzw. Pigment, beispielsweise ein Effektpigment, ein schallabsorbierender Füllstoff und/oder ein feuchteregulierender Füllstoff, zugegeben wird.

## Claims

1. A plate-shaped building element for fixing to a building wall or ceiling based on at least one mineral lightweight filler and at least one binder, wherein the plate-shaped building element has an external reinforcement in the form of a woven fabric, nonwoven fabric or paper,
**characterised in that** a further reinforcement is disposed on the inside, so that the plate-shaped building element comprises a reinforced and a reinforcement-free surface, wherein the further reinforcement is disposed essentially parallel to the external reinforcement and off-centre in relation to the cross-section of the plate-shaped building element and wherein the distance of the further reinforcement from the reinforced surface of the plate-shaped building element is greater than the distance from the reinforcement-free surface of the plate-shaped building element; furthermore, that layers of the same material or layers of the same initial material are separated from one another by the reinforcement lying on the inside; and that the material or the initial material for producing the layer constituting the reinforcement-free surface has been enriched by at least one further auxiliary material.

2. The building element according to claim 1,
**characterised in that** the total thickness of the plate-shaped building element amounts to 5 to 40 mm and the distance of the reinforcement lying on the inside from the reinforcement-free surface amounts to 0.5 mm to 15 mm.

3. The building element according to claim 1 or 2,
**characterised in that** the reinforcement-free surface has a structure and/or a pattern.

4. The building element according to any one of the preceding claims,
**characterised in that** the reinforcement-free surface has a coating and/or a paint coat, wherein at least one additional auxiliary material, in particular a hydrophobising agent, a preserving agent, a biocide, an indicator, an initiator, an activator, a dye, a pigment, for example an effect pigment, a sound-absorbing filler and/or a moisture-regulating filler, is preferably contained in the coating and/or the paint coat.

5. The building element according to any one of the preceding claims,
**characterised in that** the mineral lightweight filler comprises expanded particles made of a glass-rich volcanic rock, such as for example obsidian, vermiculite and/or pumice.

6. The building element according to any one of the preceding claims,
**characterised in that** the mineral lightweight filler comprises expanded glass granulate.

7. The building element according to any one of the preceding claims,
**characterised in that** the binder comprises an organic binder, in particular based on epoxy resin or polyurethane, a polymer dispersion and/or a thermosetting and/or radiation-setting binder.

8. The building element according to any one of the preceding claims,
**characterised in that** the binder comprises an inorganic binder, in particular waterglass and/or a cementitious hydraulic binder.

9. A method for producing a plate-shaped building element based on at least one mineral lightweight filler and at least one binder, wherein the method comprises the following steps,
- mixing of the initial materials comprising at least one mineral lightweight filler and at least one binder, so that a homogeneous mixture is present,
- lining a mould with a woven fabric, nonwoven fabric or paper serving as reinforcement,
- introduction of a first part of the homogeneous mixture comprising at least one mineral lightweight filler and at least one binder into the mould,
- insertion of a further woven fabric, nonwoven fabric or paper serving as reinforcement,
- introduction of a further part of the homogeneous mixture into the mould, so that the inserted further woven fabric, nonwoven fabric or paper is covered by the introduced mixture, wherein the ratio of the further part to the first part of the homogeneous mixture is < 1, preferably <0.5,
- closing of the mould and setting of the mould contents while adding pressure and/or heat.

10. The method according to claim 9,
**characterised in that** expanded particles made of glass-rich volcanic rock, such as for example obsidian, vermiculite and/or pumice, and/or expanded glass granulate are used as a mineral lightweight filler and are mixed with at least one binder and/or at least one further mineral lightweight filler.

11. The method according to claim 9 or 10,
**characterised in that** at least one organic binder, in particular based on epoxy resin or polyurethane, a polymer dispersion and/or a thermosetting and/or radiation-setting binder is used as a binder.

12. The method according to any one of claims 9 to 11,
**characterised in that** at least one inorganic binder, in particular waterglass and/or a cementitious hydraulic binder, is used as a binder.

13. The method according to any one of claims 9 to 12,
**characterised in that** 75 to 95 wt.-%, preferably 83 to 93 wit.-%, of at least one mineral lightweight filler and 5 to 25 wt.-%, preferably 7 to 17 wit.-%, of at least one binder are mixed, in each case related to the total weight of the initial materials.

14. The method according to any one of claims 9 to 13, **characterised in that** at least one auxiliary material, in particular a hydrophobising agent, a preserving agent, a biocide, an indicator, an initiator, an activator, a dye, a pigment, for example an effect pigment, a sound-absorbing filler and/or a moisture-regulating filler, is added at least to the further part of the homogeneous mixture comprising at least one mineral lightweight filler and at least one binder before introduction into the mould.

15. The method according to any one of claims 9 to 14,
**characterised in that** a structure and/or a pattern is embossed into the reinforcement-free surface of the plate-shaped building element to be produced, during the setting while adding pressure and/or heat.

16. The method according to any one of claims 9 to 15,
**characterised in that** the reinforcement-free surface of the plate-shaped building element is provided, after setting and removal from the mould, with a structure and/or a pattern.

17. The method according to any one of claims 9 to 16,
**characterised in that** the reinforcement-free surface of the plate-shaped building element is provided, after setting and removal from the mould, with a coating and/or a paint coat, wherein an auxiliary material, in particular a hydrophobising agent, a preserving agent, a biocide, an indicator, an initiator, an activator, a dye or pigment, for example an effect pigment, a sound-absorbing filler and/or a moisture-regulating filler, is preferably added beforehand to the coating and/or the paint coat.

## Revendications

1. Élément de construction en forme de panneau, destiné à être fixé à un mur ou plafond de bâtiment, à base d'au moins une matière de charge minérale légère et d'au moins un liant, l'élément de construction en forme de panneau comportant une armature extérieure sous la forme d'une toile, d'un non-tissé ou d'un papier,
**caractérisé en ce qu'**une armature intérieure supplémentaire est agencée de manière à ce que l'élément de construction en forme de panneau présente une surface armée et une surface sans armature, l'armature supplémentaire étant agencée quasiment parallèlement à l'armature extérieure et de façon excentrée par rapport à la section transversale de l'élément de construction en forme de panneau, et l'espacement de l'armature supplémentaire par rapport à la surface armée de l'élément de construction en forme de panneau étant supérieur à l'espacement par rapport à la surface sans armature de l'élément de construction en forme de panneau ; et **en ce que** des couches d'un même matériau ou des couches d'un même matériau de départ sont séparées les unes des autres par l'armature intérieure ; et **en ce que** le matériau ou matériau de départ pour la fabrication de la couche formant la surface sans armature a été enrichi d'au moins un adjuvant supplémentaire.

2. Élément de construction selon la revendication 1,
**caractérisé en ce que** l'épaisseur totale de l'élément de construction en forme de panneau mesure entre 5 mm et 40 mm, et l'espacement entre l'armature intérieure et la surface sans armature mesure entre 0,5 mm et 15 mm.

3. Élément de construction selon la revendication 1 ou 2,
**caractérisé en ce que** la surface sans armature présente une structure et/ou une décoration.

4. Élément de construction selon l'une des revendications précédentes,
**caractérisé en ce que** la surface sans armature présente un revêtement et/ou une couche de peinture, le revêtement et/ou la couche de peinture contenant de préférence au moins un adjuvant supplémentaire, en particulier un agent hydrophobant, un agent conservateur, un biocide, un indicateur, un initiateur, un activateur, un colorant, un pigment, par exemple un pigment à effet, une matière de charge absorbant le son et/ou une matière de charge régulant l'humidité.

5. Élément de construction selon l'une des revendications précédentes,
**caractérisé en ce que** la matière de charge minérale légère comprend des particules expansées constituées d'une roche volcanique riche en verre, telle que par exemple l'obsidienne, la vermiculite et/ou la pierre ponce.

6. Élément de construction selon l'une des revendications précédentes,
**caractérisé en ce que** la matière de charge minérale légère comprend un granulat de verre soufflé.

7. Élément de construction selon l'une des revendications précédentes,
**caractérisé en ce que** le liant comprend un liant organique, en particulier à base de résine époxy ou de polyuréthane, une dispersion polymère et/ou un liant durcissable à la chaleur et/ou par rayonnement.

8. Élément de construction selon l'une des revendications précédentes,
**caractérisé en ce que** le liant est un liant minéral, en particulier du verre soluble et/ou un liant hydraulique cimenteux.

9. Procédé pour la fabrication d'un élément de construction en forme de panneau à base d'au moins une matière de charge minérale légère et d'au moins un liant, le procédé comprenant les étapes suivantes .
- mélange des matériaux de départ, comprenant au moins une matière de charge minérale légère et au moins un liant, de manière à obtenir un mélange homogène,
- revêtement d'un moule avec une toile, un non-tissé ou un papier servant pour l'armature,
- introduction d'une première partie du mélange homogène comprenant au moins une matière de charge minérale légère et au moins un liant dans le moule,
- insertion d'une toile, d'un non-tissé ou d'un papier supplémentaire servant pour l'armature,
- introduction d'une autre partie du mélange homogène dans le moule, de manière à ce que la toile, le non-tissé ou le papier supplémentaire inséré soit recouvert par le mélange introduit, le rapport entre l'autre partie et la première partie du mélange homogène étant < 1, de préférence < 0,5,
- fermeture du moule et durcissement du contenu du moule, avec ajout de pression et/ou de chaleur.

10. Procédé selon la revendication 9,
**caractérisé en ce que** des particules expansées constituées d'une roche volcanique riche en verre, telle que par exemple de l'obsidienne, de la vermiculite et/ou de la pierre ponce, et/ou un granulat de verre soufflé, est utilisé en tant que matière de charge minérale légère, et mélangé avec au moins un liant et/ou au moins une matière de charge minérale légère supplémentaire.

11. Procédé selon la revendication 9 ou 10,
**caractérisé en ce qu'**au moins un liant organique, en particulier à base de résine époxy ou de polyuréthane, une dispersion polymère et/ou un liant durcissable à la chaleur et/ou par rayonnement, est utilisé en tant que liant.

12. Procédé selon l'une des revendications 9 à 11,
**caractérisé en ce qu'**au moins un liant minéral, en particulier du verre soluble et/ou un liant hydraulique cimenteux, est utilisé en tant que liant.

13. Procédé selon l'une des revendications 9 à 12,
**caractérisé en ce que** 75 à 95% en poids, de préférence entre 83 et 93% en poids d'au moins une matière de charge minérale légère et entre 5 et 25% en poids, de préférence entre 7 et 17% en poids d'au moins un liant, respectivement par rapport au poids total des matériaux de départ, sont mélangés.

14. Procédé selon l'une des revendications 9 à 13,
**caractérisé en ce qu'**au moins un adjuvant, en particulier un agent hydrophobant, un agent conservateur, un biocide, un indicateur, un initiateur, un activateur, un colorant, un pigment, par exemple un pigment à effet, une matière de charge absorbant le son et/ou une matière de charge régulant l'humidité, est ajouté au moins à l'autre partie du mélange homogène comprenant au moins une matière de charge minérale légère et au moins un liant, avant l'introduction dans le moule.

15. Procédé selon l'une des revendications 9 à 14,
**caractérisé en ce qu'**une structure et/ou une décoration est gravée dans la surface sans armature de l'élément de construction en forme de panneau pendant le durcissement avec ajout de pression et/ou de chaleur.

16. Procédé selon l'une des revendications 9 à 15, **caractérisé en ce que** la surface sans armature de l'élément de construction en forme de panneau est pourvue d'une structure et/ou d'une décoration après le durcissement et le démoulage.

17. Procédé selon l'une des revendications 9 à 16,
**caractérisé en ce que** la surface sans armature de l'élément de construction en forme de panneau est pourvu d'une revêtement et/ou d'une couche de peinture après le durcissement et le démoulage, sachant qu'un adjuvant, en particulier un agent hydrophobant, un agent conservateur, un biocide, un indicateur, un initiateur, un activateur, un colorant, un pigment, par exemple un pigment à effet, une matière de charge absorbant le son et/ou une matière de charge régulant l'humidité, est de préférence préalablement ajouté au revêtement et/ou à la couche de peinture.
